# EUROPEAN PATENT SPECIFICATION

(11) **EP 2 345 556 B1**
(45) Date of publication and mention of the grant of the patent: **29.07.2015**
(21) Application number: 11150952.7
(22) Date of filing: 14.01.2011
(51) Int. Cl.: B60P 1/64, B62D 25/20

(54) **Transport vehicle with a locking device**
Transportfahrzeug mit einer Sperrvorrichtung
Véhicule de transport avec un dispositif de verrouillage

(30) Priority: 15.01.2010 FI 20105028
(43) Date of publication of application: 20.07.2011
(73) Proprietor: Sora ja Betoni, V. Suutarinen Ky, 52700 Mäntyharju (FI)
(72) Inventor: SUUTARINEN, Timo, 52700, MÄNTYHARJU (FI)
(74) Representative: Helke, Kimmo Kalervo

(56) References cited:
- WO-A1-91/12153
- WO-A1-02/070301
- US-A- 5 362 184
- US-A- 5 738 479
- US-A1- 2009 047 115

## Description

The present invention relates to an arrangement in the frame of a transport vehicle, which arrangement includes
- an auxiliary frame for a superstructure, which is fitted on top of the frame of the transport vehicle, which frame includes frame beams,
- several locking elements for fastening the auxiliary frame detachably to the frame, and the locking element consists of a locking pin, which is supported moveably on the frame,
- a locking counter-piece corresponding to the locking pin, arranged in the auxiliary frame, which locking, counter-piece is formed by a sleeve extending through the auxiliary frame,
- an operating element for moving the locking pin, and
- a support collar arranged to support the locking pin, which is attached to the frame by a support structure, and the operating element is supported on the support structure.

The invention also relates to an installation kit for forming an arrangement in the frame of a transport vehicle.

In transport vehicles, such as trucks, for example, exchangeable skip devices are in use. For example, using a hook-skip device, a general-purpose skip can be raised from the ground onto a truck, and lowered off the truck onto the ground. The hook-skip device is installed on top of the frame of the truck, so that the skip with the auxiliary frame rises as much as 200 millimetres above the frame. In other words, due to the hook-skip device, the distance from the ground to the surface of the skip increases significantly. The load height rises, which hinders loading and unloading. At the same time, useful load height is lost and with high loads driving under bridges, for example, can cause problems. The centre of gravity of the load also rises, which reduces the vehicle's stability. In practice, the hook-skip device is suitable only for simple skips. In addition, the hook-skip device reduces the payload, as a hook-skip device can weight as much as 1500 kilos. Besides the hook-skip device, cable or chain -driven skip devices are also used, these being slightly lighter than the hook-skip device.

The aforementioned hook-skip device is quick to use, but it is unsuitable, for example, for handling load bodies and especial device totalities. In addition, the attachment of the skip is uncertain. An arrangement is also known, in which an auxiliary frame for a superstructure is supported on top of the frame of a transport vehicle and is fastened using separate locking elements. Particularly the opening of the locking is labourious, so that the arrangement is not applied in daily use. In practice, the locking elements are wedges, the removal of which can even take more than one hour while in some applications the superstructure will prevent the removal of the wedges in field conditions. In practice, the locking element includes several wedges, which can detach during transport. Thus, despite the plurality of locking elements, the fastening of the arrangement is not achieved. The wedges also wear in use if they are removed repeatedly. The detaching and attaching of the wedges demands going on top of the frame, which is a serious safety risk.

US patent number 5829946 discloses a simple waste-container attachment to a truck incorporating a waste press.

US patent number 5738479 discloses a system of modular attachments for a railcar or truck trailer to convert the trailer to various uses is disclosed. A system of compressed air driven locking pins allows the various modules to be readily secured to or removed from the trailer chassis. Air suspension shock absorbers permit the load to be weighed on the car or trailer.

The present invention is intended to create a new type of arrangement in the frame of a transport vehicle, which is low and sturdy, as well as being able to be rapidly opened and connected. In addition, the invention is intended to create a new type of transport vehicle, which is more versatile in use than previously and more widely adaptable. Further, the invention is intended to create a new type of installation kit for forming an arrangement for a transport-vehicle frame, which is compact and requires only a small installation space. The characteristic features of the arrangement according to the invention are stated in the accompanying Claim 1. Correspondingly, the characteristic features of the installation kit according to the invention are stated in the accompanying Claim 12. The construction of the arrangement according to the invention is simple, but the locking achieved by it is reliable. In addition, the locking can be easily and rapidly opened and connected. The speed and reliability are achieved by fitting most of the locking elements permanently to the vehicle. This avoids loose parts that are easily lost. In addition, the locking has no gaps and holds in all directions. By utilizing operating elements, the arrangement can be used successfully without tools and, above all, quickly. The superstructure can thus be changed even several times a day, so that the vehicle can be used versatilely for different transport purposes. The arrangement is also suitable for use with different device totalities. The installation kit itself is also compact and can easily be fitted as part of the frames of different types of vehicle.

In the following, the invention is described in detail with reference to the accompanying figures showing some embodiments of the invention, in which
- Figure 1a: shows a side view of an, as such, known truck, equipped with a concrete container,
- Figure 1b: shows a side view of an, as such, known truck, equipped with a concrete mixer,
- Figure 1c: shows a side view of an, as such, known truck, equipped with a hook-skip device,
- Figure 2a: shows a rear view of an embodiment of the arrangement according to the invention,
- Figure 2b: shows a partial enlargement of a cross-section of Figure 2a,
- Figure 3a: shows part of a second embodiment of the arrangement according to the invention, seen in the same way as Figure 2a,
- Figure 3b: shows a schematic perspective view of the arrangement according to the invention,
- Figure 4a: shows one installation kit according to the inveention, and
- Figure 4b: shows one transport vehicle equipped with arrangements according to the invention, with two alternative superstructures.

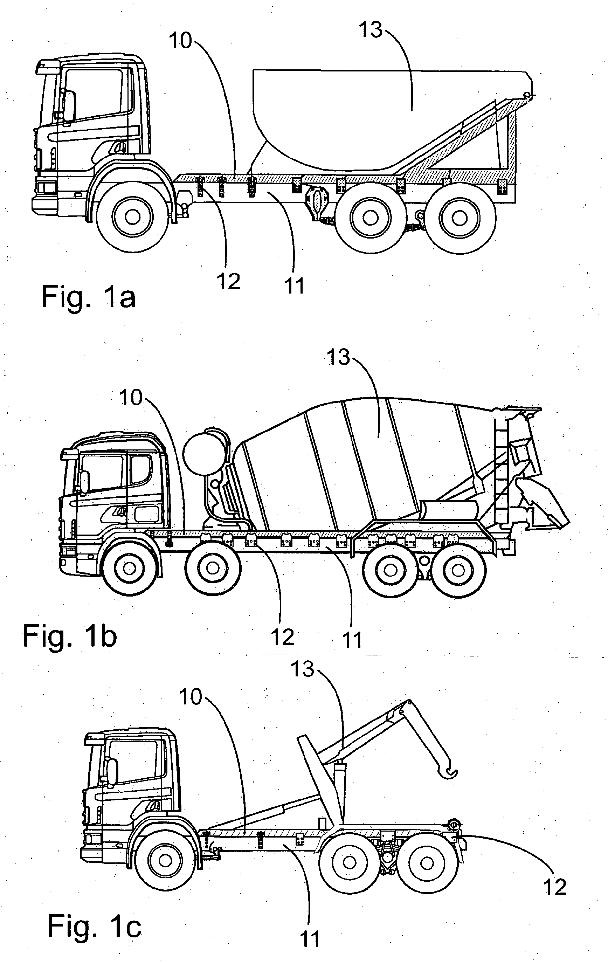

Figures 1a - c show transport vehicles that are, as such, conventional, which in this case are trucks. The trucks shown have different types of chassis, with different types of superstructure on them. In other words, each truck is designed and manufactured for a specific tasks. Precisely due to the superstructures, the frames of the trucks are subject to torsion stress. Thus, auxiliary frames, which extend to nearly the entire length of the truck, have been installed on top of the frames. The frame and the auxiliary frame together then form a functional totality, which is sufficiently stiff against loadings, especially bending. In Figures 1a - c, the auxiliary frames 10 are shown by diagonal shading. The truck in Figure 1a is equipped with a concrete container, the auxiliary frame being supported on the frame 11 by eight attachments 12 on each side of the frame. In Figure 1b, the auxiliary frame 10 of the concrete mixer is supported on the truck's frame 11 by thirteen attachments 12 on each side of the frame. Figure 1c shows a hook-skip device, the auxiliary frame 10 of which is supported on the truck's frame 11 by five attachments 12 on each side of the frame. All the vehicles shown are adapted for a single function. Different types of simple skips and containers can be attached only to the hook-skip device.

As such, the aforementioned attachments can be replaced with a known conical-pin arrangement, in which the openings arranged in the superstructure's auxiliary frame are adapted onto relatively large conical pins arranged vertically permanently in the frame of the transport vehicle. Impractical and labourious wedges must then be used. In addition, the conical pins require alterations to the vehicle's frame. In addition, the conical pins require alteration of the vehicle's frame. The support structures then made may even limit the use of certain types of superstructure. In addition, the wedges may remain under the superstructure, in which case it will be impossible to remove in field conditions. On the other hand, a certain type of superstructure can prevent the use of a conical-pin arrangement entirely. In other words, the conical-pin arrangement is unsuitable for most superstructures.

Thus, the invention relates to an arrangement in the frame of a transport vehicle. Generally, the arrangement includes an auxiliary frame 10 for a superstructure 13, which auxiliary frame is fitted on top of the frame 11 of the transport vehicle. In other words, the auxiliary frame is directly, or nearly directly on the upper surface of the frame beam. In addition, the arrangement includes a plurality of locking elements 14 for fastening the auxiliary frame 10 detachably to the frame 11. Thus, by releasing the locking elements, the superstructure can be detached from the transport vehicle. The locking element 14 is formed of a locking pin 15 supported on the frame 11, a locking counter-piece 17 corresponding to which being arranged in the auxiliary frame 10. In addition, a locking counter-piece 17, corresponding to the locking pin 15 is arranged in the auxiliary frame 10. The arrangement also includes an operating element 16 for moving the locking pin 15. Thanks to the operating element, the locking pin can be operated without tools. In addition, the locking pin is attached by a support structure to form part of the frame, so that it is impossible to detach. The locking pin is thus supported on the frame, so that the forces and loadings are transmitted from the auxiliary frame through the locking pin directly to the frame, and vice versa. In this way, detrimental bending moments are avoided and mainly only shear forces act on the locking pin. A support collar 19, which is attached by a support structure 20 to the frame 11, is arranged to support the locking pin 15. The operating element 16 too is supported on the support structure 20. In the arrangement each locking element 14 consists of a locking pin 15. In addition, the locking counter-piece 17 consists of a sleeve attached to the auxiliary frame 10, and which extends through a steel beam 37 belonging to the auxiliary frame 10. Further, the height of the support structure 20 is less than that of the auxiliary frame 10. In practice, the durability of the fastening achieved by means of the locking pin and the sleeve extending through the auxiliary frame corresponds to a bolted joint according to the prior art. The operating element too is saved from excess loading and is easy to fasten to the frame. Above all, the locking created is reliable, but can be easily and rapidly locked and opened nearly an infinite number of times. Thus, the superstructure can always be changed as required, without tools, quickly and easily. The locking pin, together with the support collar and sleeve, forms a bearing, which permits the bending of the frame and auxiliary frame, without breaking. It has been observed in tests, that the fastenings achieved using the arrangement according to the invention withstand, for example, the repeated tipping of a gravel skip, without breaking. In addition, to the auxiliary frame 10 belongs a steel beam 37 through which the sleeve 21 extends and which is arranged aligned right to the top of the frame beam 18. Also the height of the support structure 20 is less than the height of the steel beam 37 while the most of the support structure 20 together with operating element 16 is arranged above the frame beams 18.

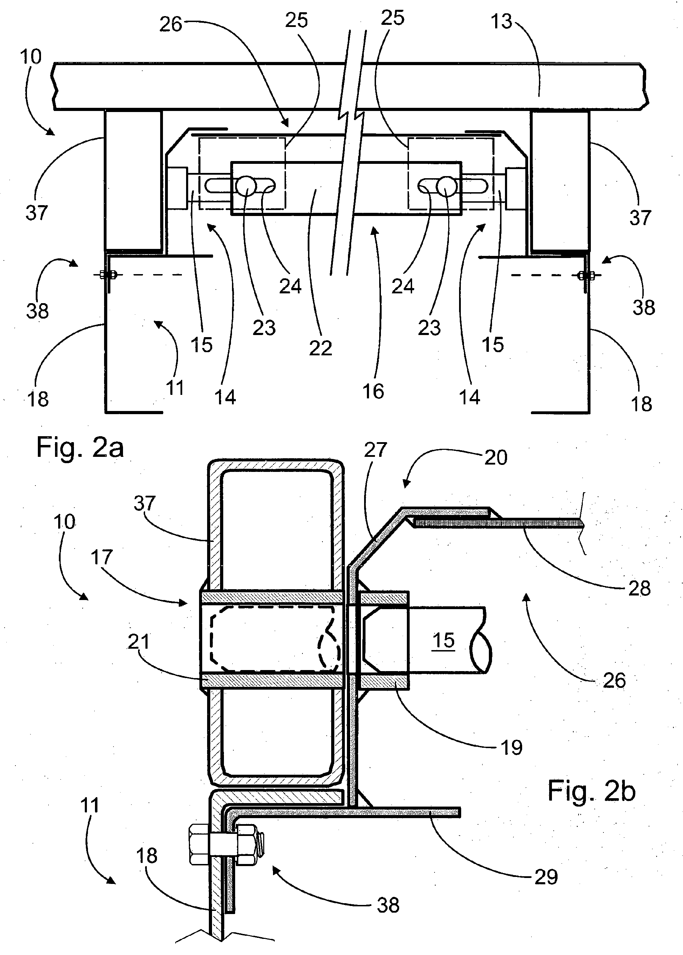

Figure 2a shows a rear view of the arrangement according to the invention. In a conventional manner, the frame 11 of the transport vehicle consists of two parallel frame beams 18, the distance between which is about 1000 mm. The distance depending on the manufacturer and model of the transport vehicle. Cross-braces and other possible support structures are not shown, for reasons of clarity. In this case, the locking pin 15 is supported on a support collar 19 attached to the frame 11, through a support structure 20 (Figure 2b). The support collar acts as a guide for the locking pin and, in addition, strengthens the structure. The auxiliary frame 10, to which the locking pins 15 fasten, comes on top of the frame beams. Sturdy locking is then easily achieved.

Figure 2b shows the construction according to the invention in greater detail. The support collar 19 is attached to the frame by a support structure 20, the height of which is, according to the invention, less than that of the auxiliary frame 10. Thus, the support structure fits inside the auxiliary frame, without in any way hindering, never mind increasing the height of the frame structure. In addition, the locking counter-piece 17 thus consists of a sleeve 21, which extends through the steel beam 37 belonging to the auxiliary frame 10. The locking pin then has a precisely-shaped locking counter-piece. In addition, the sleeve can be attached securely to the auxiliary frame, which is also mainly formed of steel profiles, such as rectangular profiles. In this case, the sleeve 21 is welded at both ends to the steel beam 37, on both walls of which the sleeve is thus supported. In addition, the sleeve extending fully through the steel beam is open at both ends, so that possible dirt can escape from the sleeve. The internal dimension of the sleeve is slightly greater than the external dimension of the locking pin. The coupling will then be reliable even in demanding conditions, without the locking pin jamming in the sleeve. Grease nipples, by means of which lubrication can be placed between the opposing surfaces, are preferably used in connection with the sleeve and/or support collar. The grease will also help to eliminate play. Play can also be avoided by using a locking pin with a conical head. By also arranging the sleeve to narrow, a self-aligning and tightening locking will be achieved, which is entirely play-free.

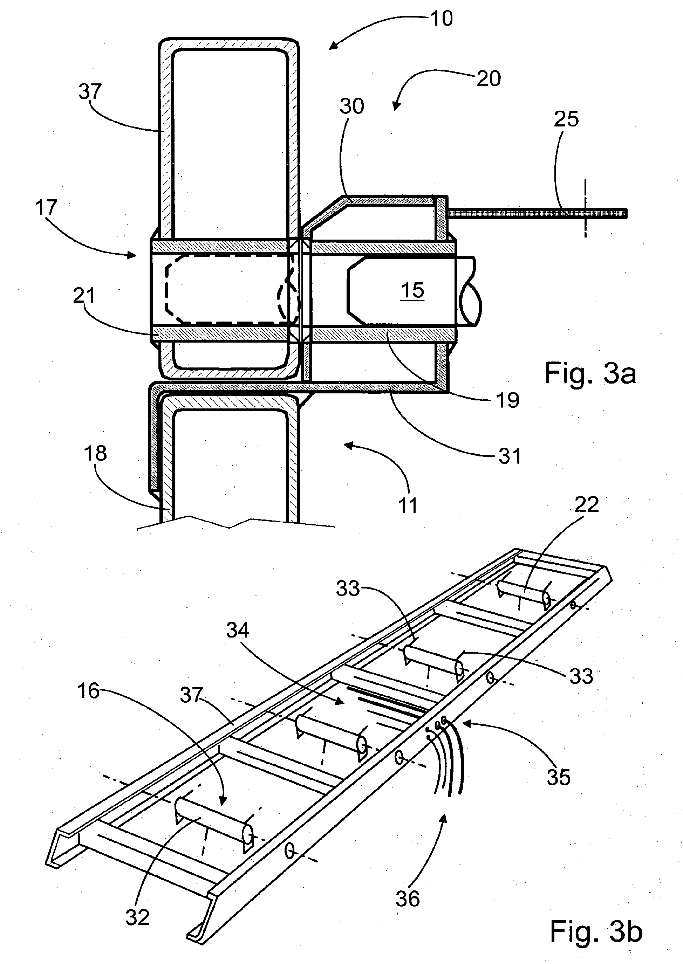

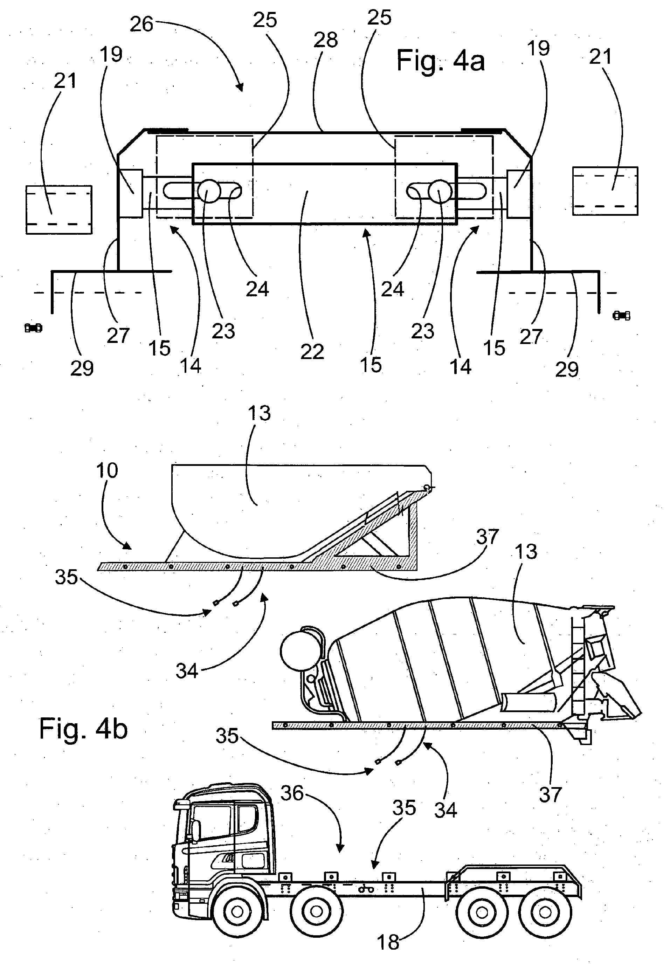

The operating element and locking pin can be fitted to each other in different ways. For example, the locking pin can be fitted as an extension of a short hydraulic cylinder and the hydraulic cylinder can be attached to the frame of the transport vehicle by means of the support structure. In the embodiments shown, two opposing locking pins 15 are connected to a single operating element 16, which is arranged to float in a support structure 20 (Figures 2a and 4a). During locking, the hydraulic cylinder then lengthens, pushing the locking pins farther from each other. Once one or other of the locking pins is home, the hydraulic cylinder installed in a floating manner continues to extend, until the other locking pin is home. Correspondingly, when opening the coupling, the hydraulic cylinder 22 first of all pulls the more detached locking pin out of the sleeve. Once the limiter pin 23 reaches the end of the slot 24, the other locking pin too begins to move out of its sleeve. In addition, the limiter pin, which is moveably supported in the slot, prevents the hydraulic cylinder from rotating, thus preventing the hydraulic hoses from breaking. In Figure 2a, the slots 24 are formed in a support plate 25, which is shown here by broken lines. In Figure 3a, the support plate 25 is horizontal and the location of the limiter pin is shown by a broken line.

In the embodiment of Figure 2b, the support structure 20 includes a transverse beam 26, which is fastened detachably to the frame 11. Here, the support structure 20 is attached to the frame 11 by a bolted joint 38. Thus, the attachment is made sturdy and the support structure can be detached and attached again at another location, or to another transport vehicle. The question is of a very compact construction, which can be located in connection with different types of frame. Here, the transverse beam 26 is formed by a plate structure, in which the support collar 19 is attached to an end plate 27, to the upper part of which is welded a plate 28 extending to a second corresponding end plate. The plate 28, which is about 200-mm wide, in addition protects the operating element from loose objects falling from above. An angle iron 29, by means of which the transverse beam is attached to the frame by several fasteners, such as bolts equipped with nuts, is welded to the lower part of the end plate 27. The location of the locking pin too can be adjusted to correspond to the installation height of the sleeves of the auxiliary frame, by altering the installation location of the transverse beam. Thanks to the structure supporting the support collar and transverse beam, loadings are transferred from the auxiliary frame to the frame, without loading the operating element. In Figure 3a, the support structure 20 includes a longitudinal beam 30, through which the support collar 19 extends. In this case, the support structure is stiff enough for the transverse beam to be omitted. The structure is further reinforced by an installation plate 31, which extends from between the auxiliary frame 10 and frame 11 to outside of the frame 11. In addition, the installation plate 31 is welded at both sides to the frame 11. The auxiliary frame 10 is then raised about 10 - 20-mm higher than in the embodiment of Figure 2b. In other ways, the operation of the embodiment corresponds to that of the embodiment of Figure 2b.

The dimensioning of the sleeves, support collars, locking pins, operating elements, and support structures can vary in different embodiments. In a tested embodiment, a locking-pin diameter of 50 mm was used. Preferably, in the open position, the end of the locking pin 15 remains inside the support collar 19, as shown in Figures 2b and 3a. In the closed position, the locking pin 15 protrudes deeply into the sleeve 21, which is shown by the broken-line locking pin outline in Figures 2b and 3a. The grease nipples are not shown. One support structure according to the invention, together with the operating devices and locking pins, weighs only about 40 kilograms. In the end plate 27 and longitudinal beams 30, there is a sloping part, guided by which the auxiliary frame 10 settles into the correct location, even though the vehicle might not be completely correctly aligned. In the longitudinal direction, alignment is made by arranging an end stop in the vehicle, against which the superstructure is pushed by moving the vehicle.

In the transport vehicle shown, there is a superstructure auxiliary frame fitted on top of the frame. The auxiliary frame is detachably fastened to be frame by a plurality of locking elements. Here each locking element is formed of a locking pin and the locking counter-piece is formed of a sleeve attached to the auxiliary frame, which extends through the steel beam belonging to the auxiliary frame, and the height of the support structure is less than that of the auxiliary frame. Thus, one or other of the arrangements described above, or a variation of them, is preferably used in the transport vehicle.

The superstructure can be detached in different ways. In connection with the arrangement according to the invention, the air suspension of the vehicle, or, as such known, lifting cylinders attached to the frame can be applied. For example, using air suspension, the height of the vehicle can be changed by about 200 mm. In the superstructure, there can also be telescopic support legs. Irrespective of the manner of lifting, the locking is opened and the superstructure on top of the vehicle is raised to its upper position. After this, support legs or similar are placed under the superstructure and the vehicle is moved away from under the superstructure.

Next, the transport vehicle is moved under the desired superstructure, which is supported separately from the chassis. In the vehicle, there is preferably an end stop, which the superstructure auxiliary frame strikes. The auxiliary frame and frame will then be in the correct longitudinal position. By raising the vehicle and/or lowering the superstructure, the auxiliary frame and the frame are brought opposite to each other. The sloping parts of the support structure 20 guide the auxiliary frame 10 laterally, when the auxiliary frame 10 will automatically take up its correct position. After this, the operating elements are used to move the locking pins into the sleeves, after which the locking is ready. In practice, by using the arrangement according to the invention, the superstructure can be replaced with another in a few minutes.

In principle, the arrangement could be standardized, in which case different transport vehicles and superstructures could be mutually cross-coupled. However, there is so great variation in chassis and superstructures that the greatest advantage will be gained by equipping a vehicle with several alternative superstructures, the locking counter-pieces of which are arranged according to the locking pins. In other words, the arrangement is vehicle-make-specific, and is based on the frame width, whereas known skip devices are based on the width of the superstructure. In other words, the arrangement is arranged for a single piece of transport equipment. Of course, in practice, it is possible to use, for example, ten trucks, in all of which is the same type of arrangement. In that case, any auxiliary frame, dimensioned and equipped according to the arrangement, belonging to the transport equipment, can be fastened to any of the trucks. In particular, there could be several simple skips, but only one or two concrete mixers, for example. What is important is the high utilization of the trucks and their flexible adaptability to correspond to the transport needs at any time.

The number of locking pins depends largely on the size of the transport vehicle, there being generally one or two locking pins to each metre of length of the auxiliary frame. In embodiments described, this means one to two pairs of locking pins to each metre of length. The operating elements 16 of Figure 3b are permanently installed in the frame (not shown). A compressed-medium union 32 is led to the operating elements and this is controlled using suitable valves, for example, from the cab. The operating elements 16 also preferably include sensors, which detect the open and closed positions of the locking pins. The cables 33 of the sensors are connected and their information is displayed, for example, on the dashboard in the cab. Thus, the driver can work the operating elements from the cab and always be sure when the locking is open and when it is closed. The control means can also be elsewhere in the vehicle and can also be wireless devices, like a remote control.

Using only the locking pins, a sturdy coupling between the frame and the auxiliary frame is achieved. In practice, there are numerous operations in superstructures, such as tipping, that demand, for example, hydraulic pressure. According to the invention, the necessary unions 34 for operations are arranged in the auxiliary frame 10. In addition, the unions are connected to quick-release connectors 35, the hoses 36 corresponding to which are fitted to the vehicle. Then, despite the superstructure, the operations can be performed while still permitting a rapid change. For example, known hook-skip equipment is completely incompatible with device totalities, as it lacks the necessary connections.

If the auxiliary frame of Figure 3b was that of a skip, the two thin hoses could be for automatic lubrication of the pivots. Correspondingly, the two thick hoses would be for the tipping cylinder and the tailgate cylinders. In other words, the tipping cylinder would be part of the auxiliary frame. In that case, when the tipping skip was removed, only the arrangements would remain in the transport vehicle. Correspondingly, in a concrete mixer, one hose would be for the hydraulic motor rotating the mixer, the second hose being for the lifting cylinder of the unloading chute. In general, a single connection on a vehicle can be used for different operations in different superstructures, which are arranged as part of each superstructure. Naturally, the number of connections is selected according to the superstructures required. In any event, using even simple vehicle connections it is possible to use even very diverse operations. The connections can also include, for example, compressed-air, electrical, and/or control connections. As well as, or instead of hydraulic operating devices, it is possible to use, for example, pneumatic cylinders or linear motors. In addition, instead of cylindrical or conical locking pins, pins of other shapes can be used. At the same time, the shape of the fastening counter-piece will change. In Figures 2b and 3a, the auxiliary frame is formed from two steel beams 37. Possible diagonal and transverse support are not shown. In Figure 3b, the steel beams of the auxiliary frame 10 are C-beams, which are connected by transverse steel profiles. At the locations of the arrangements, additional plates would be added to the auxiliary frame in question, which would be welded between the flanges of the C-profiles. The sleeve could then be welded at both ends to the auxiliary frame.

Figure 4a shows one installation kit according to the invention, which is ready to be attached to the transport vehicle. In addition to the installation kit, hydraulic hoses and control valves, for example, will be required, the number of which will vary with each case. In the installation kit, all the locking elements 14 consist of locking pins 15. In addition, the installation kit also includes locking counter-pieces 17, corresponding to the locking pins 15, to be arranged in the auxiliary frame. In the existing auxiliary frame, a opening is first machined for the locking counter-pieces, each locking counter-piece 17 of which consists of a sleeve 21, the length of which is greater than the cross dimension of the steel beam belonging to the future auxiliary frame. In addition, a support structure is selected, the height of which is less than the future auxiliary frame. Thus, the support structure will fit under the auxiliary frame. The support structure 20 preferably includes two support collars 19 arranged opposite to each other, inside each of which a locking pin 15 is arranged and, in addition, an operating element 16 is arranged between the locking pins 15, concentrically with the locking pins 15. This makes the structure compact while no excess stresses act of the operating element supported on the support structure and the operating element can be supported in a floating manner.

Figure 4b shows one transport vehicle, in which there is an arrangement according to the invention. Six support structure with an operating element are attached to the frame 18. In the vehicle, there are also the requisite quick-release connectors 35 and connections 36. In the two superstructures according to the invention there are corresponding quick-release connectors 35 and unions 34. Thus, in the example, a concrete mixer can be replaced in a few minutes with a concrete container by disconnecting the quick-release connectors, changing the superstructures with the aid of the arrangement, and reconnecting the quick-release connectors. Only a sufficient number of installation kits according to the invention are required for the basic vehicle, and corresponding sleeves in the auxiliary frame for the superstructure, as well as suitable connections and unions with quick-release connectors. After installation, the totality is always available and can be freely adapted. Once the superstructure has been removed, only a so-called zero truck remains, in which there is no excess mass. In other words, the maximum payload is always available. For example, a possible loader can be attached to the auxiliary frame of a piece-goods platform.

The arrangement according to the invention permits the full utilization of a transport vehicle, such as a truck, for example, as a gravel truck, a timber truck, a skip truck, a piece-goods truck, as well as a concrete truck, as required. Thus, a single truck can be used for all purposes, which was previously impossible. In addition, increases in height and weight are avoided, while the changing of the superstructure is nevertheless rapid. In addition to a truck, the arrangement can also be used in trailers. By means of the arrangement, it is even possible to attach a fifth wheel to a semi-trailer tractor. It is then possible, for example, to attach a fifth wheel in place of a gravel box.

## Claims

1. Arrangement in the frame of a transport vehicle, which arrangement includes
- an auxiliary frame (10) for a superstructure (13), which is fitted on top of the frame (11) of the transport vehicle, which frame (11) includes frame beams (18),
- several locking elements (14) for fastening the auxiliary frame (10) detachably to the frame (11), and each looking element (14) formed of a loocking pin (15), which is supported moveably on the frame (11),
- a locking counter-piece (17) corresponding to the locking pin (15), arranged in the auxiliary frame (10), which locking counter-piece (17) is formed by a sleeve (21) extending through the auxiliary frame (10),
- an operating element (16) for moving the locking pin (15), and
- a support collar (19) arranged to support the locking pin (15), which is attached to the frame (11) by a support structure (20), and the operating element (16) is supported on the support structure (20),
**characterized in that** to the auxiliary frame (10) belongs a steel beam (37) through which the sleeve (21) extends and which is arranged aligned right to the top of the frame beam (18), and the height of the support structure (20) is less than the height of the steel beam (37) while the most of the support structure (20) together with operating element (16) is arranged above the frame beams (18).

2. Arrangement according to Claim 1, **characterized in that** the support structure (20) is detachably attached to the frame (11).

3. Arrangement according to Claim 2, **characterized in that** the support structure (20) is attached to the frame (11) by bolted joints (38).

4. Arrangement according to any of Claims 1 - 3, **characterized in that** the end of the locking pin (15) is conical.

5. Arrangement according to any of Claims 1 - 4, **characterized in that** two locking pins (15) are joined to a single operating element (16), which is arranged to float in a support structure (20).

6. Arrangement according to any of Claims 1 - 5, **characterized in that** the support structure (20) includes a longitudinal beam (30), through which the support collar (19) extends.

7. Arrangement according to any of claims 1 - 5, **characterized in that** the support structure (20) includes a transverse beam (26), which is fastened detachably to the frame (11).

8. Arrangement according to any of claims 1 - 7, **characterized in that** there are one or two locking pins (15) to each metre of length of the auxiliary frame (10).

9. Arrangement according to any of Claims 1 - 8, **characterized in that** the transport vehicle is equipped with a plurality of alternative superstructures (13), in which the sleeves (21) are arranged according to the locking pins (15).

10. Arrangement any of Claims 1 - 9, **characterized in that** the auxiliary frame (10) includes the requisite unions (34) for the operations of the superstructure (13), and the connections (34) are, in addition, connected to quick-release connectors (35), connections (36) corresponding to which are fitted to the transport vehicle.

11. Arrangement according to Claim 10, **characterized in that** the connections (36) include hydraulic, compressed-air, electrical, and/or control connections.

12. Installation kit for creating an arrangement in the frame of a transport vehicle, which installation kit includes
- a plurality of locking elements (14) for fastening the auxiliary frame (10), belonging to the transport vehicle, detachably to the frame (11), belonging to the transport vehicle, and all the locking elements (14) consist of locking pins (15),
- support collars (19) arranged to support the locking pins (15),
- locking counter-pieces (17), corresponding to the locking pins (15), to be arranged in the auxiliary frame (10), and each locking counter-piece (17) consists of a sleeve (21), and
- an operating element (16) for moving the locking pin,
the installation kit further includes a support structure (20) to be attached to the frame (11) including frame beams (18), to which the support collars (19) are attached, and on which the operating element (16) is supported, **characterized in that** the length of the sleeve (21) is greater than the cross dimension of the steel beam (37) belonging to the auxiliary frame (10), and the height of the support structure (20) is less than the height of the steel beam (37), which is arranged to positioned aligned right to the top of the frame beam (18), while the most of the support structure (20) together with operating element (16) is arranged to be positioned above the frame beams (18).

13. Installation kit according to Claim 12, **characterized in that** the support structure (20) includes two support collars (19) arranged opposing each other, inside each of which a locking pin (15) is fitted, and an operating element (16) is arranged between the locking pins (15), concentrically with the locking pins (15).

## Patentansprüche

1. Anordnung im Rahmen eines Transportfahrzeugs, dessen Anordnung einschließt
- einen Hilfsrahmen (10) für einen Aufbau (13), der auf dem Rahmen (11) des Transportfahrzeugs montiert ist, dessen Rahmen (11) Rahmenbalken (18) einschließt,
- mehrere Verriegelungselemente (14) für die Befestigung des abnehmbaren Hilfsrahmens (10) am Rahmen (11), und ein Verriegelungselement (14) besteht aus einem Verriegelungsbolzen (15), der beweglich am Rahmen (11) gestützt wird,
- ein Verriegelungs-Gegenstück (17) entsprechend zum Verriegelungsbolzen (15) im Hilfsrahmen (10) angeordnet, dessen Verriegelungs-Gegenstück (17) durch eine Hülse (21) gebildet wird, die durch den Hilfsrahmen (10) führt,
- ein Bedienelement (16), um den Verriegelungsbolzen (15) zu bewegen, und
- eine Traghülse (19), angeordnet den Verriegelungsbolzen (15) zu stützen, die mit Hilfe einer tragenden Struktur (20) am Rahmen (11) befestigt ist , und das Bedienelement (16) wird auf der tragenden Struktur (20) gestützt,
**dadurch gekennzeichnet, dass** zu dem Hilfsrahmen (10) ein Stahlbalken (37) gehört, durch den die Hülse (21) führt und der in einer Linie auf dem Rahmenbalken (18) angeordnet ist, und die Höhe der tragenden Struktur (20) geringer als die Höhe des Stahlbalkens (37) ausfällt, während der Großteil der tragenden Struktur (20) zusammen mit dem Bedienelement (16) oberhalb der Rahmenbalken (18) angeordnet ist.

2. Anordnung gemäß dem Patentanspruch 1, **dadurch gekennzeichnet, dass** die tragende Struktur (20) abnehmbar am Rahmen (11) befestigt ist.

3. Anordnung gemäß dem Patentanspruch 2, **dadurch gekennzeichnet, dass** die tragende Struktur (20) mit Hilfe von Schraubverbindungen (38) am Rahmen (11) angebracht ist.

4. Anordnung gemäß einem der Patentansprüche 1 - 3, **dadurch gekennzeichnet, dass** das Ende des Verriegelungsbolzens (15) konisch ist.

5. Anordnung gemäß einem der Patentansprüche 1 - 4, **dadurch gekennzeichnet, dass** zwei Verriegelungsbolzen (15) in einem einzelnen Bedienelement (16) vereint sind, das schwimmend in der tragenden Struktur (20) angeordnet ist.

6. Anordnung gemäß einem der Patentansprüche 1 - 5, **dadurch gekennzeichnet, dass** die tragende Struktur (20) einen Längsbalken (30) umfasst, durch den die Traghülse (19) führt.

7. Anordnung gemäß einem der Patentansprüche 1 - 5, **dadurch gekennzeichnet, dass** die tragende Struktur (20) einen Querbalken (26) umfasst, der abnehmbar am Rahmen (11) befestigt ist.

8. Anordnung gemäß einem der Patentansprüche 1 - 7, **dadurch gekennzeichnet, dass** sich ein oder zwei Verriegelungsbolzen (15) nach jedem Meter entlang der Länge des Hilfsrahmens (10) befinden.

9. Anordnung gemäß einem der Patentansprüche 1 - 8, **dadurch gekennzeichnet, dass** das Transportfahrzeug mit einer Vielzahl an alternativen Aufbauten (13) ausgerüstet ist, in denen die Hülsen (21) gemäß der Verriegelungsbolzen (15) angeordnet sind.

10. Anordnung gemäß einem der Patentansprüche 1 - 9, **dadurch gekennzeichnet, dass** der Hilfsrahmen (10) die erforderlichen Verbindungen (34) für den Betrieb des Aufbaus (13) umfasst, und die Verbindungen (34) darüber hinaus mit den Schnellkupplungen (35) verbunden sind, die Anschlüsse (36) entsprechend dem Transportfahrzeug angepasst sind.

11. Anordnung gemäß dem Patentanspruch 10, **dadurch gekennzeichnet, dass** die Anschlüsse (36) Hydraulik-, Druckluft, elektrische - und/oder Steuerungsanschlüsse umfassen.

12. Montagesatz zum Aufbau einer Anordnung im Rahmen eines Transportfahrzeugs, wobei der Montagesatz einschließt
- eine Vielzahl an Verriegelungselementen (14) zur Befestigung des zum Transportfahrzeug gehörenden Hilfsrahmens (10), der wiederum abnehmbar am Rahmen (11) des Transportfahrzeug befestigt ist, sowie alle aus Verriegelungsbolzen (15) bestehende Verriegelungselemente (14).
- Traghülsen (19), angeordnet um die Verriegelungsbolzen (15) zu stützen.
- Verriegelungs-Gegenstücke (17) entsprechend zu den Verriegelungsbolzen (15) im Hilfsrahmen (10) angeordnet, und jedes Verriegelungs-Gegenstück (17) besteht aus einer Hülse (21), und
- ein Bedienelement (16), um den Verriegelungsbolzen zu bewegen,
der Montagesatz umfasst weiterhin eine tragende Struktur (20), um an den Rahmen (11) befestigt zu werden, der wiederum Rahmenbalken (18) umfasst, an die Traghülsen (19) angebracht sind, auf denen das Bedienelement (16) gestützt ist, **dadurch gekennzeichnet, dass** die Länge der Hülse (21) größer ist als die Querabmessung des zum Hilfsrahmen (10) gehörenden Stahlbalkens (37), und die Höhe der tragenden Struktur (20) ist geringer als die Höhe des Stahlbalkens (37), der in einer Linie auf dem Rahmenbalken (18) angeordnet ist, während der Großteil der tragenden Struktur (20) zusammen mit dem Bedienelement (16) oberhalb der Rahmenbalken (18) angeordnet ist.

13. Montagesatz gemäß dem Patentanspruch 12, **dadurch gekennzeichnet, dass** die tragende Struktur (20) zwei gegenüber angeordnete Traghülsen (19) umfasst, in denen jeweils innen ein Verriegelungsbolzen (15) eingepasst ist, und ein Bedienelement (16) ist konzentrisch mit den Verriegelungsbolzen (15) zwischen den Verriegelungsbolzen (15) angeordnet.

## Revendications

1. Dispositif dans le châssis d'un véhicule de transport, lequel dispositif comprend
- un châssis auxiliaire (10) pour une superstructure (13), lequel est installé au-dessus du châssis (11) du véhicule de transport, lequel châssis (11) comprend des poutres de châssis (18),
- plusieurs éléments de verrouillage (14) pour attacher le châssis auxiliaire (10) au châssis (11) de manière détachable, et chaque élément de verrouillage (14) consiste en une goupille d'arrêt (15), qui prend appui de façon mobile sur le châssis (11),
- une contre-pièce de verrouillage (17) correspondant à la goupille d'arrêt (15), disposée dans le châssis auxiliaire (10), laquelle contre-pièce de verrouillage (17) est formée d'un manchon (21) qui s'étend à travers le châssis auxiliaire (10),
- un élément de commande (16) pour déplacer la goupille d'arrêt (15), et
- un collier de soutien (19) disposé de sorte à soutenir la goupille d'arrêt (15), lequel est attaché au châssis (11) par une structure de soutien (20), et l'élément de commande (16) prend appui sur la structure de soutien (20),
**caractérisé en ce qu'**au châssis auxiliaire (10) appartient une poutre d'acier (37) à travers laquelle le manchon (21) s'étend et qui est disposée alignée directement au sommet de la poutre de châssis (18), et la hauteur de la structure de soutien (20) est inférieure à la hauteur de la poutre d'acier (37) tandis que la majeure partie de la structure de soutien (20) ensemble avec l'élément de commande (16) est disposée au-dessus des poutres de châssis (18).

2. Dispositif selon la revendication 1, **caractérisé en ce que** la structure de soutien (20) est attachée au châssis (11) de manière détachable.

3. Dispositif selon la revendication 2, **caractérisé en ce que** la structure de soutien (20) est attachée au châssis (11) à l'aide d'assemblages boulonnés (38).

4. Dispositif selon l'une quelconque des revendications 1 à 3, **caractérisé en ce que** l'extrémité de la goupille d'arrêt (15) est conique.

5. Dispositif selon l'une quelconque des revendications 1 à 4, **caractérisé en ce que** deux goupilles d'arrêt (15) sont combinés à un seul élément de commande (16), qui est disposé de sorte qu'il a du jeu dans la structure de soutien (20).

6. Dispositif selon l'une quelconque des revendications 1 à 5, **caractérisé en ce que** la structure de soutien (20) comprend une poutre longitudinale (30), à travers laquelle le collier de soutien (19) s'étend.

7. Dispositif selon l'une quelconque des revendications 1 à 5, **caractérisé en ce que** la structure de soutien (20) comprend une traverse (26), qui est attachée au châssis (11) de manière détachable.

8. Dispositif selon l'une quelconque des revendications 1 à 7, **caractérisé en ce qu'**il y a une ou deux goupilles d'arrêt (15) pour chaque mètre de la longueur du châssis auxiliaire (10).

9. Dispositif selon l'une quelconque des revendications 1 à 8, **caractérisé en ce que** le véhicule de transport est muni de plusieurs superstructures alternatives (13), dans lesquelles les manchons (21) sont disposés selon les goupilles d'arrêt (15).

10. Dispositif selon l'une quelconque des revendications 1 à 9, **caractérisé en ce que** le châssis auxiliaire (10) comprend les raccords (34) nécessaires pour les opérations de la superstructure (13), et les raccords (34) sont en outre connectés aux connecteurs à libération rapide (35), les connexions (36) qui correspondent auxquels sont installées dans le véhicule de transport.

11. Dispositif selon la revendication 10, **caractérisé en ce que** les connexions (36) comprennent des connexions hydrauliques, d'air comprimé, électriques et/ou de contrôle.

12. Kit d'installation pour créer un dispositif dans le châssis d'un véhicule de transport, lequel kit d'installation comprend
- plusieurs éléments de verrouillage (14) pour attacher le châssis auxiliaire (10), appartenant au véhicule de transport, de manière détachable au châssis (11), appartenant au véhicule de transport, et tous les éléments de verrouillage (14) consistent en goupilles d'arrêt (15),
- des colliers de soutien (19) disposés de sorte à soutenir les goupilles d'arrêt (15),
- des contre-pièces de verrouillage (17), correspondant aux goupilles d'arrêt (15), à être disposées dans le châssis auxiliaire (10), et chaque contre-pièce de verrouillage (17) consiste en un manchon (21), et
- un élément de commande (16) pour déplacer la goupille d'arrêt,
le kit d'installation comprend en outre une structure de soutien (20) à être attachée au châssis (11) comprenant des poutres de châssis (18), auxquelles les colliers de soutien (19) sont attachés, et sur lesquelles l'élément de commande (16) s'appuie, **caractérisé en ce que** la longueur du manchon (21) est supérieure à la dimension transversale de la poutre d'acier (37) appartenant au châssis auxiliaire (10), et la hauteur de la structure de soutien (20) est inférieure à la hauteur de la poutre d'acier (37), qui est disposée de sorte à être positionnée alignée directement au sommet de la poutre de châssis (18), tandis que la majeure partie de la structure de soutien (20) ensemble avec l'élément de commande (16) est disposée de sorte à être positionnée au dessus des poutres de châssis (18).

13. Kit d'installation selon la revendication 12, **caractérisé en ce que** la structure de soutien (20) comprend deux colliers de soutien (19) disposés l'un en face de l'autre, à l'intérieur de chacun desquels est installée une goupille d'arrêt (15), et un élément de commande (16) est disposé entre les goupilles d'arrêt (15), de manière concentrique par rapport aux goupilles d'arrêt (15).
